# EUROPEAN PATENT SPECIFICATION

(11) **EP 2 849 008 B1**
(45) Date of publication and mention of the grant of the patent: **03.04.2019**
(21) Application number: 13183951.6
(22) Date of filing: 11.09.2013
(51) Int. Cl.: G05B 19/042, D06F 39/06, D06F 33/02, D06F 35/00

(54) **Foam-reducing procedure in a washing machine during a spinning cycle**
Verfahren zur Reduzierung des Schaums in einer Waschmaschine während des Schleuderns
Procédé pour réduire la mousse dans un lave-linge en phase d'essorage

(43) Date of publication of application: 18.03.2015
(73) Proprietor: ELECTROLUX APPLIANCES AKTIEBOLAG, 105 45 Stockholm (SE)
(72) Inventor: Gasparini, Mirko, 33080 Porcia (PN) (IT)
(74) Representative: Electrolux Group Patents

(56) References cited:
- DE-A1-102010 038 969
- US-A1- 2005 197 264
- US-A1- 2010 199 440

## Description

The present invention relates to a method for operating a washing machine according to the preamble of claim 1. Further, the present invention relates to a corresponding washing machine.

Known washing machines comprise a casing containing a washing tub in which there is a rotatable laundry drum in which the laundry to be washed can be loaded. A hydraulic circuit is provided for taking washing liquid, i.e. water and water mixed with a cleaning product, inside the washing tub and the laundry drum, so as to wash or rinse the laundry, and for draining, e.g. by using a drain pump, this liquid outside the machine. In other known washing machines drain pump is not provided and the washing liquid is drained from the tub by gravity.

During a washing cycle in a washing machine one or more dewatering phases, balancing phases, spinning phases and rinsing phases are performed. When the washing liquid is moved, for example by rotating the laundry drum, in particular when such liquid contains a detergent, a certain amount of foam is typically generated. If too much foam is generated in the washing tub or in the draining region thereof, then some phases of the washing cycle cannot be faultlessly performed.

In particular an high amount of foam can be very negative during the spinning and draining phase of the washing cycle (in which the laundry drum is rotated at high speed and the liquid present in the washing tub is drained from the machine), since the foam compromises a correct functioning of the drain pump (if provided) and it obstructs the draining of the liquid from the machine.

Some known methods for operating a washing machine are known, in which the amount of foam in the washing tub is monitored, in particular during the spinning phase, in order to start a foam reducing procedure if this amount is too high; these known methods detects the amount of the foam after stopping the rotation of the drum. Stopping the rotation of the drum causes the laundry contained therein to fall in the bottom of the drum and to rearrange itself in a stochastic way.

These known washing methods comprise, at the beginning of any spinning phase, an unbalancing detecting/reducing phase, in which, before reaching the final spinning speed, the degree of unbalance of the laundry inside the drum is detected, and possibly reduced by performing one or more stops and/or slow movements of the drum, which causes the laundry to rearrange its position. The problem of these known methods for detecting the amount of foam is that, since the drum is stopped before detecting the amount of foam (and the amount is detected with the drum stationary), any time the foam amount is detected during a spinning phase, a new unbalance phase has to be performed (since even if the laundry was previously in a balanced condition, by stopping the drum for detecting the amount of foam, the laundry rearranges itself in the drum, and therefore its position changes), which increases the duration and the energy consumption of the cycle.

US 2010/0199440 A1 discloses a method for eliminating foam in a drum-type washing machine, wherein said washing machine comprises a sensor for determining the foam level and/or a negative time gradient of the foam level of a liquid/air mixture contained in a detergent solution tub. The foam level is detected during a run-up to the spin speed of the laundry drum. Further, the foam level is detected via a pressure build-up during washing or spinning or via a greatly slowed decrease in pressure during a pump discharging operation. The foam detection can also be carried out by a conductance measurement using two electrodes in a lower region of the detergent solution tub. The foam detection is also possible during a spinning cycle by means of an evaluation of the difference between the nominal and actual speed.

It is an object of the present invention to provide an improved method for operating a washing machine which allows controlling the amount of foam in a washing cycle, in particular during a spinning phase, and which keeps the duration and the energy consumption of the cycle low.

The object of the present invention is achieved by the method according to claim 1.

According to the present invention said method comprises the further steps of:
- detecting a liquid level in a washing tub and/or in a draining region thereof while said laundry drum is rotating at said sticking speed, and
- starting a foam-reducing procedure if the detected liquid level corresponds to a prefixed value or is within prefixed range of values, or if the time dependent behaviour of the detected liquid level correspond to a prefixed time dependent behaviour.

The main idea of the present invention is the monitoring of the foam while keeping the laundry drum in rotation at the sticking speed at which the laundry clings at an inner periphery of the laundry drum. In this way, in particular during a spinning phase, if the laundry is already in a balanced condition inside the drum immediately before the monitoring of the foam is started, the laundry keeps this balanced condition also during the monitoring of the foam.

If the monitoring of the foam confirms that the foam reducing procedure is not necessary, since the foam amount is low enough, the drum can be accelerated up to the final spinning speed without having to perform again the unbalancing detecting/reducing phase, since it is already in a balanced state. This reduces the overall time and energy consumption of the washing cycle.

Preferably the method is performed during a spinning phase of the washing cycle and after an unbalancing detecting/reducing phase has been performed; in this case the step of rotating the laundry drum at a sticking speed at which laundry clings at an inner periphery of the laundry drum, is performed during or after the unbalancing detecting/reducing phase.

More preferably, if, after the step of detecting a liquid level in a washing tub and/or in a draining region thereof while the laundry drum is rotating at the sticking speed, the foam-reducing procedure is not started, the laundry drum is accelerated from the sticking speed to a final speed of the spinning phase without performing a further unbalancing detecting/reducing phase.

Preferably, the sticking speed of the laundry drum is equal or marginally bigger than a minimum threshold value allowing that the laundry clings at the inner periphery of said laundry drum.

Advantageously, said minimum threshold value for the rotational speed of the laundry drum is between 80 rpm and 100 rpm.

Preferably the method is performed during and/or before a dewatering phase and/or a spinning phase of the washing cycle.

According to one advantageous embodiment of the present invention, the method comprises the following steps:
- starting a predetermined monitoring period,
- detecting the liquid level in the washing tub and/or in the draining region thereof during said predetermined monitoring period,
- comparing the detected liquid level with a lower threshold value during the predetermined monitoring period, and
- if the detected liquid level does not decrease or drop below the lower threshold value within the predetermined monitoring period, then starting said foam-reducing procedure.

Advantageously, the predetermined monitoring period is between five seconds and twenty seconds, preferably ten seconds.

According to an alternative embodiment of the present invention, the method advantageously comprises the following steps:
- detecting and storing the liquid level in the washing tub and/or in the draining region thereof during a drain pump or the washing machine is activated and the laundry drum is rotating at said sticking speed,
- smoothing a signal of the stored liquid level,
- determining gradient of the smoothed liquid level,
- starting said foam-reducing procedure if the determined gradient corresponds to a prefixed range of values or is within a prefixed range of values.

Advantageously, a drain pump of the washing machine may be advantageously switched on within the predetermined monitoring period and, if said foam-reducing procedure is started, then the drain pump remains activated, and, if said foam-reducing procedure is not started, then the drain pump is switched off for a predetermined period and then switched on again.

Moreover, said predetermined period for switching off the drain pump may be advantageously between 20 seconds and 40 seconds, preferably 30 seconds.

Furthermore, said foam-reducing procedure advantageously comprises reducing the rotational speed of the laundry drum or stopping the latter and switching off the drain pump for a predetermined period and then switching it on again.

Advantageously, the predetermined period for switching off the drain pump is between a half minute and two minutes, preferably one minute.

For example, said foam-reducing procedure advantageously comprises, after reducing the rotational speed of the laundry drum or stopping the latter and switching off the drain pump of the washing machine for a predetermined period and then switching it on again, the steps of:
- detecting again the liquid level in the washing tub and/or in the draining region thereof, and,
- if the detected liquid level does still not decrease or drop below the lower threshold value within the predetermined period, adding water into in the washing tub, and draining the washing tub and starting a balancing phase.

Moreover, the present invention relates to a washing machine, wherein the washing machine is provided for the method mentioned above.

At last, the present invention relates to a computer program product stored on a computer usable medium, comprising computer readable program means for causing a computer to perform the method mentioned above.

Novel and inventive features believed to be the characteristic of the present invention are set forth in the appended claims.

The invention will be described in further detail with reference to the drawings, in which
- FIG 1: illustrates a schematic perspective view of a washing machine according to a preferred embodiment of the present invention,
- FIG 2: illustrates a schematic sectional front view of the washing machine according to the preferred embodiment of the present invention,
- FIG 3: illustrates a schematic set of diagrams as functions of the time during a time slot of a washing cycle in a first situation according to the preferred embodiment of the present invention,
- FIG 4: illustrates a schematic set of diagrams as functions of the time during the time slot of the washing cycle in a second situation according to the preferred embodiment of the present invention,
- FIG 5: illustrates a schematic set of diagrams as functions of the time during the time slot of the washing cycle in a third situation according to the preferred embodiment of the present invention, and
- FIG 6: illustrates a schematic flow chart diagram of a method for controlling a washing cycle in a washing machine according to a fourth embodiment of the present invention.

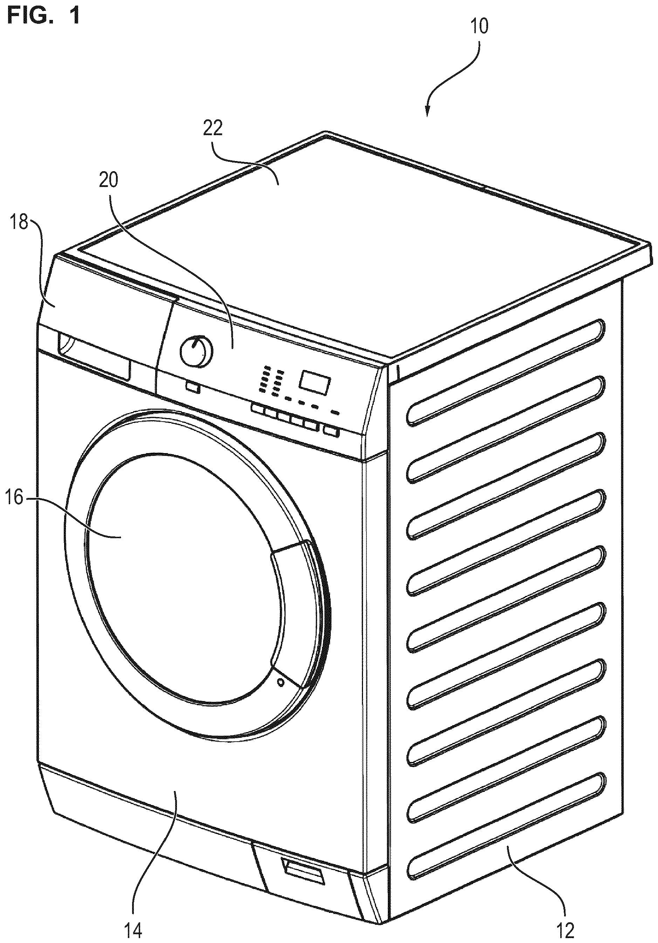

FIG 1 illustrates a schematic perspective view of a washing machine 10 according to a preferred embodiment of the present invention.

The washing machine 10 comprises a casing 12. A front panel 14 is preferably attached at the front side of the casing 12. A front door 16 is advantageously arranged in the centre of the front panel 14. A detergent drawer 18 and a control panel 20 are advantageously arranged at the front side of the casing 12 and above the front panel 14. A top cover 22 is advantageously arranged on the top side of the casing 12.

Even if the present invention has been illustrated with reference to a front loading washing machine, it is clear that the present invention is not limited to a front loading washing machine, but it also relates to a top loading washing machine.

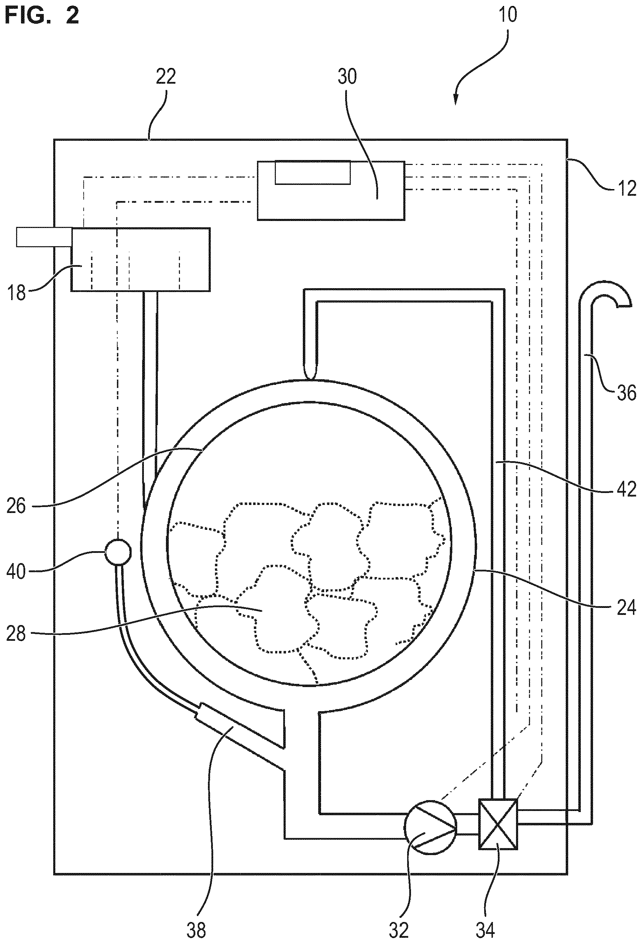

FIG 2 illustrates a schematic sectional front view of the washing machine 10 according to the preferred embodiment of the present invention. FIG 2 shows components of the washing machine 10 inside the casing 12.

The washing machine 10 advantageously comprises the casing 12 and preferably the top cover 22 arranged upon said casing 12. A washing tub 24 is arranged advantageously in a central portion inside the casing 12. A rotatable laundry drum 26 is arranged inside the washing tub 24. The laundry drum 26 and the washing tub 24 are advantageously arranged behind the front door 16. A control unit 30 is advantageously provided, preferably arranged in an upper portion of the casing 12 of the washing machine 10. The detergent drawer 18 is advantageously arranged above the washing tub 24. A drain pump 32 and preferably also a three-way valve 34 are preferably provided, preferably arranged in a lower portion of the casing 12 of the washing machine 10. A drain duct 36 is arranged partially inside and outside the casing 12 of the washing machine 10. Further, the washing machine 10 advantageously comprises an air trap 38, a pressure sensor 40 and, preferably, a circulation duct 42.

The control unit 30 is advantageously an electronic circuit. The control unit 30 is preferably electrically connected to the detergent drawer 18, and/or to the drain pump 32, and/or to the three-way valve 34 and/or to the pressure sensor 40. The detergent drawer 18 is advantageously mechanically connected to the washing tub 24 via a pipe. A bottom of the washing tub 24 is advantageously connected to an inlet of the drain pump 32. An outlet of the drain pump 32 is advantageously connected to the three-way valve 34. Further, the three-way valve 34 is advantageously directly connected to the drain duct 36 and to the circulation duct 42. The circulation duct 42 advantageously interconnects the three-way valve 34 and a top side of the washing tub 24. The fluid delivered by the drain pump 32 is preferably casted away via the drain duct 36 and/or recirculated into the washing tub 24 via the circulation duct 42, if said duct is really provided. A lower end of the air trap 38 is advantageously connected to the bottom side of the washing tub 24. A higher end of the air trap 38 is advantageously connected to the pressure sensor 40.

The three-way valve 34 and the circulation duct 42 are optional, so that the recirculation is also optional. Instead of the one drain pump 32 the washing machine 10 may comprise two drain pumps, wherein the one drain pump is provided for casting away the fluid from the washing tub 24, while the other drain pump is provided for the recirculation. Further, a filter element may be advantageously arranged downstream of the drain pump 32.

The pressure sensor 40 is provided for detecting the liquid level in the washing tub 24 or in a draining region thereof. Instead of the pressure sensor 40, other suitable sensors may be provided for detecting the liquid level in the washing tub 24 or in the draining region thereof. There are several applications of the pressure sensor 40 as explained below.

An important application of the pressure sensor 40 is the determination of the presence and/or amount of foam in the washing tub 24 and/or the draining region thereof. During the drain pump 32 is running and the laundry drum 26 is rotating, it is detected by the pressure sensor 40, if the liquid level 44 in the washing tub 24 or in a draining region thereof is dropped below a predetermined threshold value within a certain time period. Preferably, this is performed during the spinning phase of the washing cycle. Preferably, it is determined the presence and/or a high amount of foam in the washing tub 24 tub and/or in the draining region thereof if a signal from the pressure sensor 40 has decreased or dropped below a threshold value during a predetermined monitoring period 54. For example, said monitoring period 54 may be about ten seconds. If the liquid level 44 has decreased or dropped below a lower threshold value 46 within the monitoring period 54, then presence of only water or a low amount of foam is detected. If the liquid level 44 has not decreased or dropped below the lower threshold value 46, then presence of foam or a high amount of foam is detected.

According to an alternative method the detection of the presence and/or of the amount of foam inside the washing tub and/or in the draining region thereof may be performed as follows. The liquid level in the washing tub 24 and/or in the draining region thereof is detected during the drain pump is activated and the laundry drum is rotating. The detected liquid level is preferably stored. Then the signal of the stored liquid level is preferably smoothed. After that, a gradient, preferably subsequent gradients, of the smoothed liquid level are determined. Said gradient(s) allows the detection of the presence and/or of the amount of foam inside the washing tub and/or in the draining region thereof. By this alternative method the foam is detected, if the gradient of the smoothed liquid level corresponds to a prefixed value or is within a prefixed range of values, or, as an alternative, if a detected gradient is smaller than a previously detected gradient of the smoothed liquid level.

Another application of the pressure sensor 40 may be advantageously performed during the rotation of the laundry drum 26, preferably during a dewatering or spinning phase.
If, when the drum is rotating at a certain first speed, named for example first speed v1, the liquid level in the washing tub 24 or in the draining region thereof would reach a corresponding upper threshold value 48, then a closed liquid ringliquid ringliquid ring would be formed along the circumferential wall of the laundry drum 26, which impedes the draining of the liquid.
When the drum is rotating at a certain first speed v1, if the control unit 30 detects that the liquid level in the washing tub 24 or in the draining region thereof has reached a corresponding upper threshold value 48, it advantageously reduces the rotational speed of the laundry drum 26, so that the closed liquid ringliquid ringliquid ring is not formed and the draining of the liquid is not impeded.

Then control unit 30 advantageously detects, as mentioned above, the presence and/or the amount of foam in the washing tub 24 or the draining region thereof, and, if an high amount of foam is detected, it advantageously starts a foam-reducing procedure.
Further, the drain pump 32 may be advantageously switched off for a short time, e.g. about two seconds, after reaching the upper threshold value during a monitoring time period. This allows avoiding the formation of the closed liquid ringliquid ringliquid ring, and that air may exit the drain pump 32.

According to the present invention, a further advantageous application of the pressure sensor 40 is the detection of the foam as mentioned above, when the laundry drum 26 is rotating at a rotational speed at which the laundry 28 sticks, clings or remains attached to the circumferential wall of the laundry drum 26. This avoids a complete repetition of the balancing phase before the spinning phase. During the balancing phase the laundry 28 is distributed at the circumferential wall of the laundry drum 26. For attaching the laundry 28 to the circumferential wall of the laundry drum 26 with a standard diameter, a rotational speed of at least 80 rpm to 100 rpm is advantageously required. The rotational speed of the laundry drum 26 is controlled in such a way that the laundry 28 is kept attached to the circumferential wall of the laundry drum 26.

An additional application of the pressure sensor 40 may be performed after the detection of the foam as mentioned above. The drain pump 32 may be advantageously switched on again during a monitoring period. If a high amount of foam is detected, i.e. the liquid level in the washing tub 24 or in the draining region thereof exceeds the upper threshold value, the drain pump 32 is advantageously switched off again for a period, for example about 30 s, in order to settle the foam for draining. Then, then the drain pump 32 is switched on again. If the liquid level in the washing tub 24 or in the draining region thereof is below the upper threshold value, then absence of foam or a low amount of foam is detected.

If an high amount of foam is detected at the end of the monitoring period by a liquid level which is higher than the upper threshold value 48, then the rotational speed of the laundry drum 26 is preferably reduced to a low value or the laundry drum 26 is stopped and the drain pump 32 is switched off for a certain period, e.g. for one minute, in order to allow the foam to settle. Then the drain pump 32 is preferably switched on again and the liquid level is detected again. If the liquid level still does not drop below the second threshold value after the monitoring period, then preferably water is added and the washing tub 24 is drained and a balancing phase before the spinning phase is started. However, if the liquid level is lower than the threshold value, then the spinning phase is preferably commenced again, more preferably after another balancing phase.

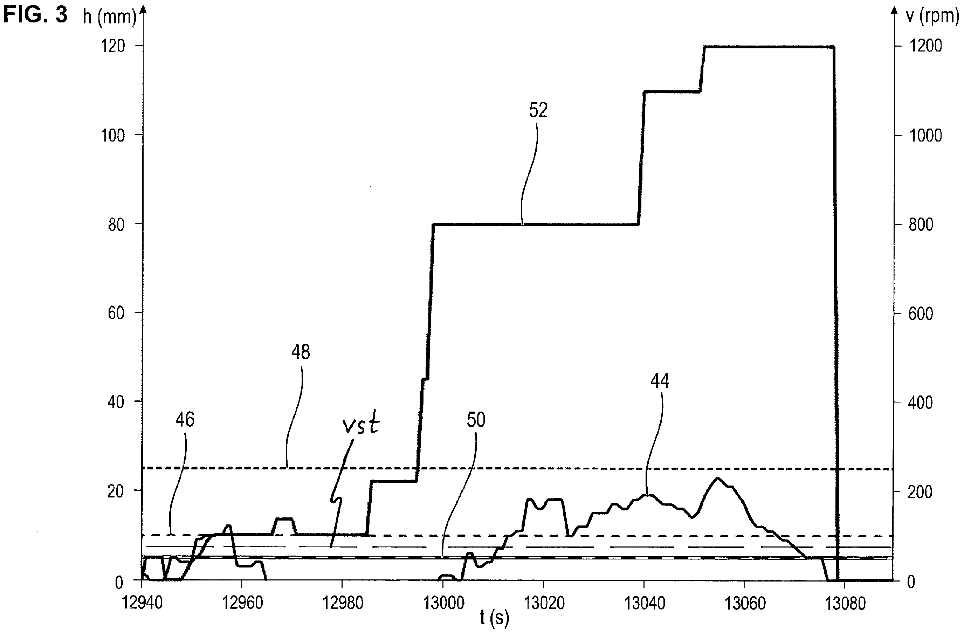

FIG 3 illustrates a schematic set of diagrams as functions of the time during a time slot of the washing cycle in a first situation according to the preferred embodiment of the present invention.

The time slot between t = 12940 s and t = 13090 s of the washing cycle is shown in FIG 3. Within said time slot the balancing phase and the spinning phase are performed. A washing phase has been performed before said time slot. During the balancing phase the rotational speed v of the laundry drum 26 increases. In the beginning of the balancing phase the laundry 28 is not attached at the circumferential wall of the laundry drum 26. However, in the end of the balancing phase the laundry 28 is attached at the circumferential wall of the laundry drum 26. In FIG 3 the spinning phase is started at about t = 12985 s.

A liquid level 44 in the washing tub 24 varies between 0 mm and about 22 mm within the time slot. A lower threshold value 46 of the liquid level is defined at 10 mm. An upper threshold value 48 of the liquid level is defined at 25 mm. The liquid level 44 in the washing tub 24 is always below the upper threshold value 48. A state 50 of the drain pump 32 is always activated during the time slot. During the spinning phase a rotational speed 52 of the laundry drum 26 reaches about 800 rpm and then about 1200 rpm. In FIG 3 the sticking speed vst is 80 rpm. In general, the sticking speed vst may be between 80 rpm and 100 rpm.

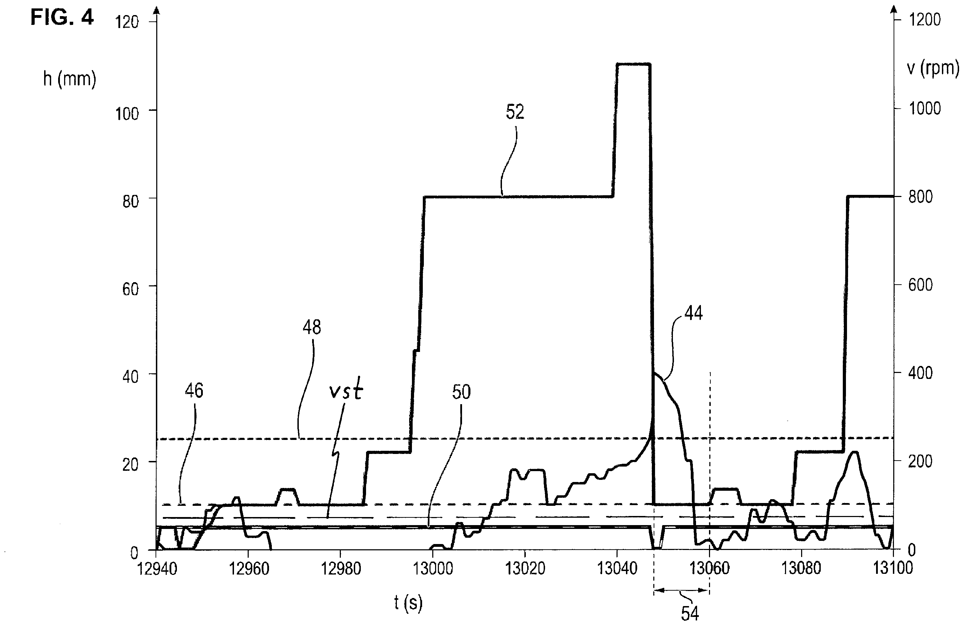

FIG 4 illustrates a schematic set of diagrams as functions of the time during the time slot of the washing cycle in a second situation according to the preferred embodiment of the present invention. Also FIG 4 shows the time slot between t = 12940 s and t = 13090 s of the washing cycle, in which time slot the balancing phase and the spinning phase occurs. In FIG 4 the spinning phase is started also at t = 12985 s.

The liquid level 44 in the washing tub 24 varies between 0 mm and about 40 mm within the time slot. The lower threshold value 46 of the liquid level is defined at 10 mm, while the upper threshold value 48 of the liquid level is defined at 25 mm. Between about t = 13048 s and t = 13055 s the liquid level 44 in the washing tub 24 exceeds the upper threshold value 48. This is the only excess of the liquid level 44 within the time slot. During the remaining times of the time slot the liquid level 44 in the washing tub 24 is below the upper threshold value 48. The state 50 of the drain pump 32 is deactivated between about t = 13048 s to t = 13052 s, after the liquid level 44 in the washing tub 24 has exceeded the upper threshold value 48. During the remaining times of the time slot the state 50 of the drain pump 32 is activated. The spinning phase is stopped at t = 13048 s, since the liquid level 44 in the washing tub 24 has exceeded the upper threshold value 48. The spinning phase remains interrupted during a timeout 54 of about ten seconds. During this timeout 54 the rotational speed 52 of the laundry drum 26 is reduced to v = 100 rpm. The liquid level 44 in the washing tub 24 goes below the lower threshold value 46 during the timeout 54. The spinning phase is restarted at t = 13060 s, after the liquid level 44 in the washing tub 24 has been detected. In FIG 4 the sticking speed vst is also 80 rpm.

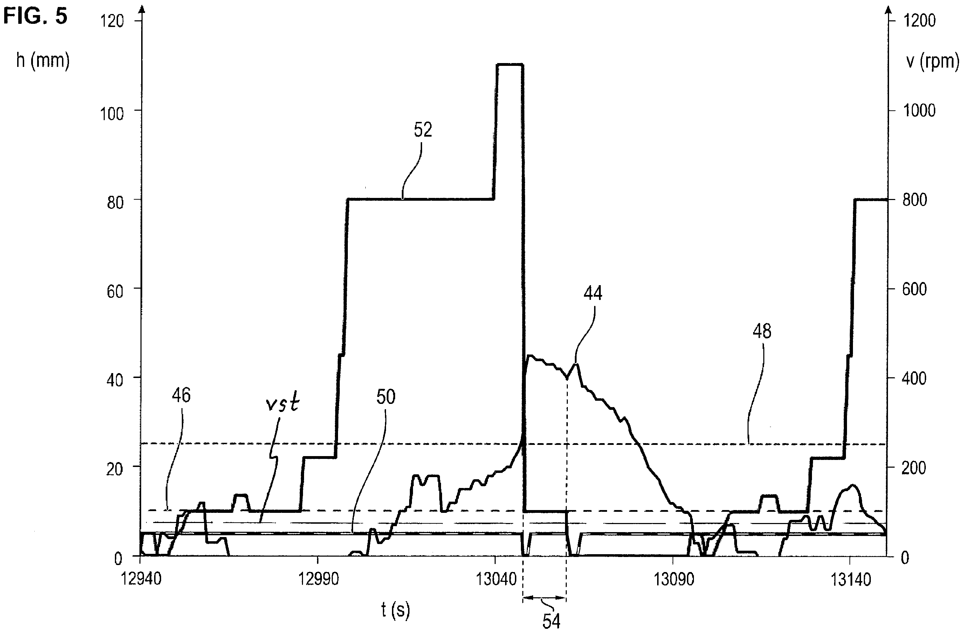

FIG 5 illustrates a schematic set of diagrams as functions of the time during the time slot of the washing cycle in a third situation according to the preferred embodiment of the present invention. FIG 5 shows also the time slot between t = 12940 s and t = 13090 s of the washing cycle, in which time slot the balancing phase and the spinning phase occurs. In FIG 5 the spinning phase is started at about t = 12985 s.

The liquid level 44 in the washing tub 24 varies between 0 mm and about 53 mm within the time slot. The lower threshold value 46 of the liquid level is defined at 10 mm, while the upper threshold value 48 of the liquid level is defined at 25 mm. Between about t = 13048 s and t = 13080 s the liquid level 44 in the washing tub 24 exceeds the upper threshold value 48 within the time slot. During the remaining times of the time slot the liquid level 44 in the washing tub 24 is below said upper threshold value 48.

The state 50 of the drain pump 32 is deactivated between about t = 13048 s to t = 13050 s, after the liquid level 44 in the washing tub 24 has exceeded the upper threshold value 48. The spinning phase is stopped at t = 13048 s, since the liquid level 44 in the washing tub 24 has exceeded the upper threshold value 48. After the timeout 54 the rotation of the laundry drum 26 is completely stopped and the state 50 of the drain pump 32 is deactivated again between about t = 13058 s to t = 13060 s, since the liquid level 44 in the washing tub 24 has not been decreased below the upper threshold value 48 and foam has been detected. The complete stop of the rotation of the laundry drum 26 at about t = 13058 s and the deactivation of the drain pump 32 between about t = 13058 s to t = 13060 s causes a decreasing of the foam. After the liquid level 44 in the washing tub 24 goes below the lower threshold value 46 at about t = 13095 s, the rotation of the laundry drum 26 is activated again. A further spinning phase is started at about t = 13125 s. In FIG 5 the sticking speed vst is also 80 rpm.

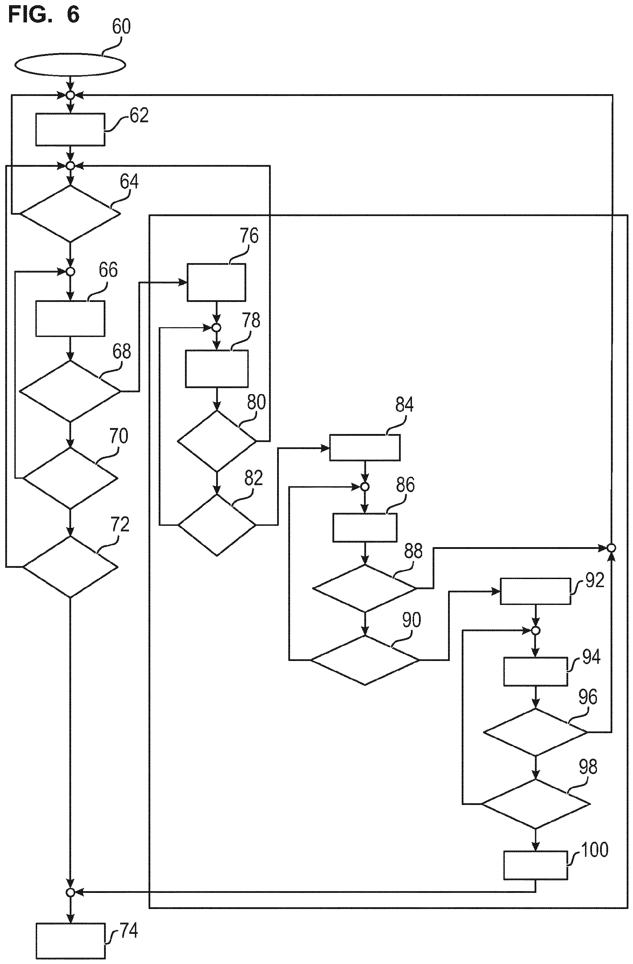

FIG 6 illustrates a schematic flow chart diagram of a method for controlling a washing cycle in a washing machine according to a fourth embodiment of the present invention.

In a step 60 the method for controlling the washing cycle is started. As a next step 62 a balancing phase is started, wherein the rotational speed of the laundry drum 26 is increased from a low speed to a high speed. During the rotation at said low speed the laundry 28 is not attached at the circumferential wall of the laundry drum 26, while the rotation at said high speed the laundry 28 is attached at the circumferential wall of the laundry drum 26.

In a further step 64 it is checked if the unbalance satisfies safety conditions. If the safety conditions are not satisfied, then the step 62 is repeated. If the safety conditions are satisfied, then the rotational speed of the laundry drum is increased in a further step 66. In a subsequent step 68 the liquid level in the washing tub 24 and/or in the draining region thereof is detected and compared with a threshold value in order to determine if a high amount of foam occurs in the washing tub 24 and/or in the draining region thereof.

If a high amount of foam is detected, then the method is set forth in a step 76. If low amount of foam or no foam at all is detected, then in a next step 70 the speed profile of the laundry drum 26 is checked. If the speed profile of the laundry drum 26 is finished, then the finalisation of the spinning phase is checked in a step 72. If the speed profile of the laundry drum 26 is not yet finished, then the step 64 and the subsequent steps are repeated again. If in the step 72 the finalisation of the spinning phase is detected, then the washing cycle is continued in a step 74.

If in the step 68 the high amount of foam has been detected, then the rotational speed of the laundry drum 26 is decreased to a predetermined minimum value in the step 76. Then the drain pump 32 is running with a constant speed in a step 78.

In a next step 80 the liquid level 44 in the washing tub 24 is detected and compared with an upper threshold value 48. If the liquid level 44 is below the upper threshold value 48, then the step 64 and its subsequent steps are repeated again. If the liquid level 44 exceeds the upper threshold value 48, then the expiring of the timeout 54 is checked in a step 82. If the timeout 54 is not yet expired, then the steps 78 and 80 are repeated again. If the timeout 54 is expired, then the laundry drum 26 and the drain pump 32 are stopped in a step 84 for a predetermined time. In this example, said predetermined time is about 30 seconds. In a next step 86 the drain pump 32 is stopped.

As a next step 88 the liquid level 44 in the washing tub 24 is detected and compared with the upper threshold value 48 again. If the liquid level 44 is below the upper threshold value 48, then the step 62 and 64 are repeated again. If the liquid level 44 exceeds the upper threshold value 48, then the expiring of the timeout 54 is checked again in a step 90. If the timeout 54 is not yet expired, then the steps 86 and 88 are repeated again. If the timeout 54 is expired, then the laundry drum 26 and the drain pump 32 are stopped in a step 92.

In a next step 96 the liquid level 44 in the washing tub 24 is detected and compared with the upper threshold value 48 again. If the liquid level 44 is below the upper threshold value 48, then the step 62 and 64 are repeated again. If the liquid level 44 exceeds the upper threshold value 48, then the expiring of the timeout 54 is checked again in a step 98. If the timeout 54 is not yet expired in the step 98, then the steps 94 and 96 are repeated again. If the timeout 54 is expired in the step 98, then the drain pump 32 is stopped in a step 100 and then the washing cycle is continued in the step 74.

The present invention is in practice the monitoring of the foam when the laundry drum is rotating at the sticking speed at which the laundry remains attached at the circumferential walls of the laundry drum. This avoids the repetition of the balancing phase from the beginning. The balancing phase is provided before the spinning phase.

## Claims

1. A method for operating a washing machine (10) adapted to perform a washing cycle and comprising a washing tub (24) in which a laundry drum (26) is contained, said method comprises the step of:
- rotating said laundry drum (26) at a sticking speed (vst), at which laundry (28) clings at an inner periphery of said laundry drum (26),
**characterised by** the further steps of:
- detecting a liquid level (44) in a washing tub (24) and/or in a draining region thereof while said laundry drum (26) is rotating at said sticking speed (vst), and
- starting a foam-reducing procedure if the detected liquid level (44) corresponds to a prefixed value or is within prefixed range of values, or if the time dependent behaviour of the detected liquid level (44) correspond to a prefixed time dependent behaviour.

2. The method according to claim 1, wherein:
- the method is performed during a spinning phase of the washing cycle and after a unbalancing detecting/reducing phase has been performed,
- said step of rotating said laundry drum (26) at a sticking speed (vst) at which laundry (28) clings at an inner periphery of said laundry drum (26), is performed during or after said unbalancing detecting/reducing phase.

3. The method according to claim 2, wherein:
- if, after said step of detecting a liquid level (44) in a washing tub (24) and/or in a draining region thereof while said laundry drum (26) is rotating at said sticking speed (vst), said foam-reducing procedure is not started, said laundry drum (26) is accelerated from said sticking speed (vst) to a final speed of said spinning phase without performing a further unbalancing detecting/reducing phase.

4. The method according to claim 1 or 2 or 3, wherein the sticking speed (vst) of the laundry drum (26) is equal or marginally bigger than a minimum threshold value allowing that the laundry (28) clings at the inner periphery of said laundry drum (26).

5. The method according to claim 4, wherein said minimum threshold value for the rotational speed (v) of the laundry drum (26) is between 80 rpm and 100 rpm.

6. The method according to claim 1, wherein the method is performed during and/or before a dewatering phase and/or a spinning phase of the washing cycle.

7. The method according to any one of the preceding claims, comprising the following steps:
- starting a predetermined monitoring period (54),
- detecting the liquid level (44) in the washing tub (24) and/or in the draining region thereof during said predetermined monitoring period (54),
- comparing the detected liquid level (44) with a lower threshold value (46) during the predetermined monitoring period (54), and
- if the detected liquid level (44) does not decrease or drop below the lower threshold value (46) within the predetermined monitoring period (54), then starting said foam-reducing procedure.

8. The method according to claim 7, wherein said predetermined monitoring period (54) is between five seconds and twenty seconds, preferably ten seconds.

9. The method according to any one of the claims 1 to 6, comprising the following steps:
- detecting and storing the liquid level (44) in the washing tub (24) and/or in the draining region thereof during a drain pump (32) of said washing machine (10) is activated and the laundry drum (26) is rotating at said sticking speed (vst),
- smoothing a signal of the stored liquid level (44),
- determining gradient of the smoothed liquid level (44),
- starting said foam-reducing procedure if the determined gradient corresponds to a prefixed range of values or is within a prefixed range of values.

10. The method according to claim 7 or 8, wherein the drain pump (32) is switched on within the predetermined monitoring period (54) and, if said foam-reducing procedure is started, then the drain pump (32) remains activated, and, if said foam-reducing procedure is not started, then the drain pump (32) is switched off for a predetermined period and then switched on again.

11. The method according to claim 10 wherein said predetermined period for switching off the drain pump (32) is between 20 seconds and 40 seconds, preferably 30 seconds.

12. The method according to any one of the preceding claims, wherein said foam-reducing procedure comprises reducing the rotational speed (v) of the laundry drum (26) or stopping the latter, and switching off a drain pump (32) of said washing machine (10) for a predetermined period and then switching it on again.

13. The method according to claim 12, wherein said predetermined period in which said drain pump (32) is switched off between a half minute and two minutes, preferably one minute.

14. The method according to claim 12 or 13, wherein said foam-reducing procedure comprises, after reducing the rotational speed (v) of the laundry drum (26) or stopping the latter and switching off the drain pump (32) for a predetermined period and then switching it on again, the steps of:
- detecting again the liquid level (44) in the washing tub (24) and/or in the draining region thereof, and,
- if the detected liquid level (44) does still not decrease or drop below the lower threshold value (46) within the predetermined period, adding water into in the washing tub (24), and draining the washing tub (24) and starting a balancing phase.

15. A washing machine, wherein the washing machine comprises means adapted to execute the steps of a method according to any one of the claims 1 to 14.

## Patentansprüche

1. Verfahren zum Betrieb einer Waschmaschine (10), die geeignet ist, einen Waschzyklus durchzuführen, und eine Waschwanne (24) umfasst, in der eine Wäschetrommel (26) enthalten ist, wobei das Verfahren die folgenden Schritte umfasst:
- Drehen einer Wäschetrommel (26) mit einer Haftgeschwindigkeit (vst), bei der Wäsche (28) an einem Innenumfang der Wäschetrommel (26) anhaftet,
**gekennzeichnet durch** die folgenden weiteren Schritte:
- Erkennen eines Flüssigkeitsstands (44) in einer Waschwanne (24) und/oder in einem Entleerungsbereich derselben, während sich die Wäschetrommel (26) mit der Haftgeschwindigkeit (vst) dreht, und
- Starten eines schaumreduzierenden Vorgangs, wenn der erkannte Flüssigkeitsstand (44) einem voreingestellten Wert entspricht oder sich in einem voreingestellten Wertebereich befindet oder wenn das zeitabhängige Verhalten des erkannten Flüssigkeitsstands (44) einem voreingestellten zeitabhängigen Verhalten entspricht.

2. Verfahren nach Anspruch 1, wobei:
- das Verfahren während einer Schleuderphase des Waschzyklus und nach Durchführen einer Phase zum Erkennen/Reduzieren einer Unwucht durchgeführt wird,
- der Schritt des Drehens der Wäschetrommel (26) mit einer Haftgeschwindigkeit (vst), bei der Wäsche (28) an einem Innenumfang der Wäschetrommel (26) anhaftet, während oder nach der Phase zum Erkennen/Reduzieren einer Unwucht durchgeführt wird.

3. Verfahren nach Anspruch 2, wobei:
- wenn nach dem Schritt des Erkennens eines Flüssigkeitsstands (44) in einer Waschwanne (24) und/oder in einem Entleerungsbereich derselben, während sich die Wäschetrommel (26) mit der Haftgeschwindigkeit (vst) dreht, der schaumreduzierende Vorgang nicht gestartet wird, die Wäschetrommel (26) von der Haftgeschwindigkeit (vst) auf eine Endgeschwindigkeit der Schleuderphase beschleunigt wird, ohne dass eine weitere Phase zum Erkennen/Reduzieren einer Unwucht durchgeführt wird.

4. Verfahren nach Anspruch 1 oder 2 oder 3, wobei die Haftgeschwindigkeit (vst) der Wäschetrommel (26) gleich einem Mindestschwellenwert oder geringfügig höher als dieser ist, was ermöglicht, dass die Wäsche (28) an dem Innenumfang der Wäschetrommel (26) anhaftet.

5. Verfahren nach Anspruch 4, wobei der Mindestschwellenwert für die Drehgeschwindigkeit (v) der Wäschetrommel (26) zwischen 80 U/min und 100 U/min liegt.

6. Verfahren nach Anspruch 1, wobei das Verfahren während und/oder vor einer Wasserablassphase und/oder einer Schleuderphase des Waschzyklus durchgeführt wird.

7. Verfahren nach einem der vorhergehenden Ansprüche, umfassend die folgenden Schritte:
- Starten einer vorgegebenen Überwachungszeit (54),
- Erkennen des Flüssigkeitsstands (44) in der Waschwanne (24) und/oder in dem Entleerungsbereich derselben während der vorgegebenen Überwachungszeit (54),
- Vergleichen des erkannten Flüssigkeitsstands (44) mit einem unteren Schwellenwert (46) während der vorgegebenen Überwachungszeit (54) und
- wenn der erkannte Flüssigkeitsstand (44) in der vorgegebenen Überwachungszeit (54) nicht sinkt oder unter den unteren Schwellenwert (46) fällt, Starten des schaumreduzierenden Vorgangs.

8. Verfahren nach Anspruch 7, wobei die vorgegebene Überwachungszeit (54) zwischen fünf Sekunden und zwanzig Sekunden, vorzugsweise bei zehn Sekunden, liegt.

9. Verfahren nach einem der Ansprüche 1 bis 6, umfassend die folgenden Schritte:
- Erkennen und Speichern des Flüssigkeitsstands (44) in der Waschwanne (24) und/oder in dem Entleerungsbereich derselben, während eine Entleerungspumpe (32) der Waschmaschine (10) aktiviert ist und sich die Wäschetrommel (26) mit der Haftgeschwindigkeit (vst) dreht,
- Glätten eines Signals des gespeicherten Flüssigkeitsstands (44),
- Ermitteln eines Gradienten des geglätteten Flüssigkeitsstands (44),
- Starten des schaumreduzierenden Vorgangs, wenn der ermittelte Gradient einem voreingestellten Wertebereich entspricht oder in einem voreingestellten Wertebereich liegt.

10. Verfahren nach Anspruch 7 oder 8, wobei die Entleerungspumpe (32) innerhalb der vorgegebenen Überwachungszeit (54) eingeschaltet wird und, wenn der schaumreduzierende Vorgang gestartet wird, die Entleerungspumpe (32) dann aktiviert bleibt und, wenn der schaumreduzierende Vorgang nicht gestartet wird, die Entleerungspumpe (32) dann für eine vorgegebene Zeit ausgeschaltet und danach wieder eingeschaltet wird.

11. Verfahren nach Anspruch 10, wobei die vorgegebene Zeit zum Ausschalten der Entleerungspumpe (32) zwischen 20 Sekunden und 40 Sekunden, vorzugsweise bei 30 Sekunden, liegt.

12. Verfahren nach einem der vorhergehenden Ansprüche, wobei der schaumreduzierende Vorgang das Senken der Drehgeschwindigkeit (v) der Wäschetrommel (26) oder das Anhalten der Letzteren und das Ausschalten einer Entleerungspumpe (32) der Waschmaschine für eine vorgegebene Zeit und dann das erneute Einschalten derselben umfasst.

13. Verfahren nach Anspruch 12, wobei die vorgegebene Zeit, in der die Entleerungspumpe (32) ausgeschaltet ist, zwischen einer halben Minute und zwei Minuten, vorzugsweise bei einer Minute, liegt.

14. Verfahren nach Anspruch 12 oder 13, wobei der schaumreduzierende Vorgang nach dem Senken der Drehgeschwindigkeit (v) der Wäschetrommel (26) oder dem Anhalten der Letzteren und dem Ausschalten der Entleerungspumpe (32) für eine vorgegebene Zeit und dann dem erneuten Einschalten derselben die folgenden Schritte umfasst:
- erneutes Erkennen des Flüssigkeitsstands (44) in der Waschwanne (24) und/oder in dem Entleerungsbereich derselben und
- wenn der erkannte Flüssigkeitsstand (44) immer noch nicht sinkt oder in der vorgegebenen Zeit unter den unteren Schwellenwert (46) fällt, Hinzufügen von Wasser in die Waschwanne (24) und Entleeren der Waschwanne (24) und Starten einer Auswuchtungsphase.

15. Waschmaschine, wobei die Waschmaschine Mittel umfasst, die geeignet sind, die Schritte eines Verfahrens nach einem der Ansprüche 1 bis 14 durchzuführen.

## Revendications

1. Procédé de commande d'un lave-linge (10) adapté pour exécuter un cycle de lavage et comprenant une cuve de lavage (24) dans laquelle un tambour à linge (26) est contenu, ledit procédé comprenant l'étape suivante:
faire tourner ledit tambour à linge (26) à une vitesse de collage (vst), °à laquelle le linge (28) adhère à une périphérie intérieure dudit tambour à linge (26),
**caractérisé par** les étapes supplémentaires suivantes:
détecter un niveau de liquide (44) dans une cuve de lavage (24) et/ou dans une région de drainage de celle-ci pendant que ledit tambour à linge (26) tourne à ladite vitesse de collage (vst), et
démarrer une procédure de réduction de mousse si le niveau de liquide détecté (44) correspond à une valeur préétablie ou est compris à l'intérieur d'une gamme de valeurs préétablie, ou si le comportement en fonction du temps du niveau de liquide détecté (44) correspond à un comportement en fonction du temps préétabli.

2. Procédé selon la revendication 1, dans lequel:
le procédé est exécuté pendant une phase d'essorage du cycle de lavage et après qu'une phase de détection/réduction de déséquilibre ait été exécutée, et
ladite étape de rotation dudit tambour à linge (26) à une vitesse de collage (vst) à laquelle le linge (28) adhère à une périphérie intérieure dudit tambour à linge (26), est exécutée pendant ou après ladite phase de détection/réduction de déséquilibre.

3. Procédé selon la revendication 2, dans lequel:
si, après ladite étape de détection d'un niveau de liquide (44) dans une cuve de lavage (24) et/ou dans une région de drainage de celle-ci pendant que ledit tambour à linge (26) tourne à ladite vitesse de collage (vst), ladite procédure de réduction de mousse n'a pas démarré, ledit tambour à linge (26) est accéléré pour passer de ladite vitesse de collage (vst) à une vitesse finale de ladite phase d'essorage sans exécuter de phase supplémentaire de détection/réduction de déséquilibre.

4. Procédé selon la revendication 1 ou 2 ou 3, dans lequel la vitesse de collage (vst) du tambour à linge (26) est égale ou marginalement supérieure à une valeur de seuil minimum qui permet que le linge (28) adhère à la périphérie intérieure dudit tambour à linge (26).

5. Procédé selon la revendication 4, dans lequel ladite valeur de seuil minimum pour la vitesse de rotation (v) du tambour à linge (26) est entre 80 tpm et 100 tpm.

6. Procédé selon la revendication 1, dans lequel le procédé est exécuté pendant et/ou avant une phase de déshydratation et/ou une phase d'essorage du cycle de lavage.

7. Procédé selon l'une quelconque des revendications précédentes, comprenant les étapes suivantes:
démarrer une période de surveillance prédéterminée (54),
détecter le niveau de liquide (44) dans la cuve de lavage (24) et/ou dans la région de drainage de celle-ci pendant ladite période de surveillance prédéterminée (54),
comparer le niveau de liquide détecté (44) avec une valeur de seuil inférieure (46) pendant la période de surveillance prédéterminée (54), et
si le niveau de liquide détecté (44) ne diminue ou ne chute pas en dessous de la valeur de seuil inférieure (46) à l'intérieur de la période de surveillance prédéterminée (54), démarrer alors ladite procédure de réduction de mousse.

8. Procédé selon la revendication 7, dans lequel ladite période de surveillance prédéterminée (54) est comprise entre cinq secondes et vingt secondes, de préférence dix secondes.

9. Procédé selon l'une quelconque des revendications 1 à 6, comprenant les étapes suivantes:
détecter et stocker le niveau de liquide (44) dans la cuve de lavage (24) et/ou dans la région de drainage de celle-ci pendant qu'une pompe de drainage (32) dudit lave-linge (10) est activée et que le tambour à linge (26) tourne à ladite vitesse de collage (vst),
lisser un signal du niveau de liquide stocké (44),
déterminer un gradient du niveau de liquide lissé (44), et
démarrer ladite procédure de réduction de mousse si le gradient déterminé correspond à une gamme de valeurs préétablie ou se situe à l'intérieur d'une gamme de valeurs préétablie.

10. Procédé selon la revendication 7 ou 8, dans lequel la pompe de drainage (32) est activée à l'intérieur de la période de surveillance prédéterminée (54) et, si ladite procédure de réduction de mousse est démarrée, alors la pompe de drainage (32) reste activée, et, si ladite procédure de réduction de mousse n'est pas démarrée, alors la pompe de drainage (32) est désactivée pendant une période prédéterminée et est ensuite activée à nouveau.

11. Procédé selon la revendication 10, dans lequel ladite période prédéterminée pour désactiver la pompe de drainage (32) est comprise entre 20 secondes et 40 secondes, de préférence 30 secondes.

12. Procédé selon l'une quelconque des revendications précédentes, dans lequel ladite procédure de réduction de mousse comprend la réduction de la vitesse de rotation (v) du tambour à linge (26) ou l'arrêt de ce dernier et la désactivation d'une pompe de drainage (32) dudit lave-linge (10) pendant une période prédéterminée et ensuite son activation à nouveau.

13. Procédé selon la revendication 12, dans lequel ladite période prédéterminée dans laquelle ladite pompe de drainage (32) est désactivée est comprise entre une demi-minute et deux minutes, de préférence une minute.

14. Procédé selon la revendication 12 ou 13, dans lequel ladite procédure de réduction de mousse comprend, après la réduction de la vitesse de rotation (v) du tambour à linge (26) ou l'arrêt de ce dernier et la désactivation de la pompe de drainage (32) pendant une période prédéterminée et ensuite son activation à nouveau, les étapes suivantes:
détecter à nouveau le niveau de liquide (44) dans la cuve de lavage (24) et/ou dans la région de drainage de celle-ci, et
si le niveau de liquide détecté (44) ne diminue ou ne chute pas encore en dessous de la valeur de seuil inférieure (46) à l'intérieur de la période prédéterminée, ajouter de l'eau dans la cuve de lavage (24), et drainer la cuve de lavage (24) et démarrer une phase d'équilibrage.

15. Lave-linge, dans lequel le lave-linge comprend des moyens adaptés pour exécuter les étapes d'un procédé selon l'une quelconque des revendications 1 à 14.
